# EUROPEAN PATENT APPLICATION

(11) **EP 4 815 040 A1**
(43) Date of publication of application: **30.09.2026**
(21) Application number: 25873705.5
(22) Date of filing: 02.09.2025
(51) Int. Cl.: H01M 4/04, G01B 7/004, G06Q 50/04, B65H 35/00, G06K 19/06

(54) **BATTERY MANUFACTURING METHOD, BATTERY MANUFACTURING SYSTEM, AND ELECTRODE ROLL**

(30) Priority: 25.09.2024 KR 20240130237
(71) Applicant: LG Energy Solution, Ltd., Seoul 07335 (KR)
(72) Inventor: KANG, Kyu Taek, Daejeon 34122 (KR); KIM, Min Su, Daejeon 34122 (KR); CHOI, Ee Beom, Daejeon 34122 (KR); PARK, Jong Seok, Daejeon 34122 (KR); KIM, Jong Woo, Daejeon 34122 (KR)
(74) Representative: BCKIP Part mbB
(86) International application number: PCT/KR2025/013476
(87) International publication number: WO 2026/071529

(57) **Abstract**

Embodiments provide a battery manufacturing system and a battery manufacturing method. A battery manufacturing system includes at least one measuring device to obtain a plurality of pieces of width data and/or a plurality of pieces of thickness data by measuring a width and/or a thickness of each of a plurality of electrode sheets in a longitudinal direction of the plurality of electrode sheets, the at least one measuring device including a width meter and/or a thickness meter, a grader to derive a representative width and/or a representative thickness of each of the electrode sheets from the plurality of pieces of width data and/or the plurality of pieces of thickness data and determine a width grade and/or a thickness grade of each of the electrode sheets according to the representative width and/or the representative thickness, and a matcher to select a pair of electrode sheets having different polarities to be combined from among the plurality of electrode sheets, based on the width grade and/or the thickness grade.

## Description

### [Technical Field]

The present disclosure relates to a battery manufacturing system, a battery manufacturing method, and an electrode roll.

This application claims the benefit of priority based on Korean Patent Application No. 10-2024-0130237, filed on September 25, 2024, and the entire content of the Korean patent application is incorporated herein by reference.

### [Background]

Batteries, and especially secondary batteries can be charged and discharged multiple times unlike primary batteries. Batteries have been widely used as energy sources for various types of wireless devices such as handsets, laptop computers, and cordless vacuum cleaners. Recently, a main use of batteries is moving from mobile devices to mobility, as manufacturing costs per unit capacity of batteries drastically decrease due to improved energy density and economies of scale and a range of battery electric vehicles (BEVs) increases to the same level as fuel vehicles.

Batteries are manufactured by an electrode process, an assembly process, and an activation process. Among these processes, the electrode process is a key process in determining the yield and performance of battery cells. The electrode process may include a coating process, a roll press process, and a slitting process. In the coating process, an active material and an insulating material may be applied to a surface of a current collector (electrode sheet). In the roll press process, the electrode sheet may be pressed by pressing rolls. In the roll press process, a density, performance and surface quality of an electrode may be determined. In the slitting process, the electrode sheet may be cut into a plurality of electrodes according to the design of a battery cell.

A positive electrode sheet and a negative electrode sheet that have undergone the electrode process may be processed by a notching process that is a process included in the assembly process. Thereafter, in a combining process (e.g., a lamination process) that is a subsequent assembly process, each of the positive electrode sheet and the negative electrode sheet may be cut at certain pitches to form a positive electrode and a negative electrode.

Alternatively, in another combining process, e.g., a winding process, each of the positive electrode sheet and the negative electrode sheet may be cut at certain pitches to form a positive electrode and a negative electrode.

In the winding process, the positive electrode and the negative electrode may be wound with a separator therebetween to manufacture an electrode assembly in the form of a jelly roll.

In the combining process, defects may occur in the manufactured electrode assembly according to a combination of sizes of the positive electrode and the negative electrode (e.g., widths and/or thicknesses of the positive electrode and the negative electrode).

Therefore, it is necessary to carefully select sizes or types of electrode sheets (a positive electrode sheet and a negative electrode sheet) that are put to manufacture a positive electrode and a negative electrode to prevent matching of a positive electrode and a negative electrode that may cause defects of the electrode assembly during the combining process.

### [Related Art Literature]

Japanese Laid-Open Patent Application No. 2010-212000 (September 24, 2010)

### [Disclosure]

### [Technical Problem]

The present disclosure provides a battery manufacturing system and method capable of selecting a width and/or a thickness of each of a positive electrode sheet and a negative electrode sheet, which are to be input to manufacture a positive electrode and a negative electrode, to prevent matching of a positive electrode and a negative electrode that may cause a defect of an electrode assembly in a combining process.

### [Technical Solution]

Embodiments of the present disclosure provide a battery manufacturing system.

The system includes: a width meter and/or a thickness meter configured to obtain at least one of a plurality of pieces of width data or a plurality of pieces of thickness data by measuring at least one of a width or a thickness of each of a plurality of electrode sheets multiple times in a longitudinal direction of the plurality of electrode sheets; a grader configured to derive a representative width and/or a representative thickness of each of the electrode sheets from the plurality of pieces of width data and/or the plurality of pieces of thickness data and determine a width grade and/or a thickness grade of each of the electrode sheets according to the representative width and/or the representative thickness; and a matcher configured to select a pair of electrode sheets having different polarities to be combined with each other from among the plurality of electrode sheets for matching, based on the width grade and/or the thickness grade.

In the system, one selected from the group comprising of an average, a standard deviation, a maximum, a minimum, a median, and a quartile of the plurality of pieces of width data or the plurality of pieces of thickness data may be set as the representative width or the representative thickness.

In the system, an upper quartile of a plurality of pieces of width data of each positive electrode sheet may be set as a representative width of each positive electrode sheet, and a lower quartile of a plurality of pieces of width data of each negative electrode sheet may be set as a representative width of each negative electrode sheet.

In the system, a median of a plurality of pieces of thickness data of each positive electrode sheet may be set as a representative thickness of each positive electrode sheet, and a median of a plurality of pieces of thickness data of each negative electrode sheet may be set as a representative thickness of each negative electrode sheet.

The grader may be configured: when the representative width of the electrode sheet falls within any one of a plurality of set electrode width sub-ranges, determine a width grade allocated to the sub-range as a width grade of the electrode sheets; and/or when a representative thickness of the electrode sheet falls within any one of a plurality of set electrode thickness sub-ranges, determine a thickness grade allocated to the sub-range as a thickness grade of the electrode sheet.

The matcher may be configured to select a pair of a positive electrode sheet and a negative electrode sheet to prevent matching of a positive electrode sheet with a width grade that is in a maximum positive electrode width sub-range and a negative electrode sheet with a width grade that is in a minimum negative electrode width sub-range; and/or select a pair of a positive electrode sheet and a negative electrode sheet to prevent matching of a positive electrode sheet with a thickness grade that is in a maximum positive electrode thickness sub-range and a negative electrode sheet with a thickness grade that is in a maximum negative electrode thickness sub-range.

The plurality of electrode sheets corresponding to a plurality of electrode lanes may be obtained by dividing one electrode sheet including the plurality of electrode lanes in the longitudinal direction. The system may further include a slitting knife configured to divide the one electrode sheet into the plurality of electrode sheets in the longitudinal direction. The width data may be obtained after the dividing of the one electrode sheet into the plurality of electrode sheets, and/or the thickness data may be obtained before the dividing of the one electrode sheet into the plurality of electrode sheets.

Embodiments of the present disclosure provide a battery manufacturing method.

The method includes obtaining at least one of a plurality of pieces of width data or a plurality of pieces of thickness data by measuring at least one of a width or a thickness of each of a plurality of electrode sheets multiple times in a longitudinal direction of the plurality of electrode sheets, deriving at least one of a representative width or a representative thickness of each of the electrode sheets from at least one of the plurality of pieces of width data or the plurality of pieces of thickness data, determining at least one of a width grade or a thickness grade of each of the electrode sheets according to at least one of the representative width or the representative thickness, and selecting a pair of electrode sheets having different polarities to be combined from among the plurality of electrode sheets for matching, based on at least one of the width grade or the thickness grade.

Each of the representative width or the representative thickness may be one selected from the group comprising of an average, a standard deviation, a maximum, a minimum, a median, and a quartile of the plurality of pieces of width data or the plurality of pieces of thickness data.

An upper quartile of a plurality of pieces of width data of each positive electrode sheet may be set as a representative width of each positive electrode sheet.

A lower quartile of a plurality of pieces of width data of each negative electrode sheet may be set as a representative width of each negative electrode sheet.

A median of a plurality of pieces of thickness data of each positive electrode sheet may be set as a representative thickness of each positive electrode sheet.

A median of a plurality of pieces of thickness data of each negative electrode sheet may be set as a representative thickness of each negative electrode sheet.

When the representative width of the electrode sheet falls within any one of a plurality of set electrode width sub-ranges, a width grade allocated to the sub-range may be determined as a width grade of the electrode sheet, and/or when the representative thickness of the electrode sheet falls within any one of a plurality of set electrode thickness sub-ranges, a thickness grade allocated to the sub-range may be determined as a thickness grade of the electrode sheet.

A pair of a positive electrode sheet and a negative electrode sheet may be selected to prevent matching of a positive electrode sheet with a width grade that is in a maximum positive electrode width sub-range and a negative electrode sheet with a width grade that is in a minimum negative electrode width sub-range, and/or a pair of a positive electrode sheet and a negative electrode sheet may be selected to prevent matching of a positive electrode sheet with a thickness grade that is in a maximum positive electrode thickness sub-range and a negative electrode sheet with a thickness grade that is in a maximum negative electrode thickness sub-range.

The plurality of electrode sheets corresponding to a plurality of electrode lanes may be obtained by dividing one electrode sheet including the plurality of electrode lanes in the longitudinal direction. In this case, the width data may be obtained after the dividing of the one electrode sheet into the plurality of electrode sheets, and/or the thickness data may be obtained before the dividing of the one electrode sheet into the plurality of electrode sheets.

Another aspect of the present disclosure provides an electrode roll into which an electrode sheet is wound, the electrode roll including a grade display label on which at least one of a width grade or a thickness grade is displayed, wherein the width grade is given according to a representative width derived from a plurality of pieces of electrode width data measured in a longitudinal direction of the electrode sheet, and the thickness grade is given according to a representative thickness derived from a plurality of pieces of electrode thickness data measured in the longitudinal direction of the electrode sheet.

### [Advantageous Effects]

According to the present disclosure, data about widths and/or thicknesses of a positive electrode sheet and a negative electrode sheet to be put into a combining process may be obtained before the combining process.

A grade of each electrode sheet may be determined based on the data about the widths and/or thicknesses.

Based on the determined width grade and/or thickness grade, a pair of a positive electrode sheet and a negative electrode sheet to be put into the combining process may be selected. That is, a positive electrode sheet and a negative electrode sheet to be put into the combining process to manufacture a positive electrode and a negative electrode may be appropriately matched, based on the determined width grade and/or thickness grade to prevent matching of a positive electrode and a negative electrode that may cause a defect of an electrode assembly, which is an intermediate product of a battery, in the combining process.

Thus, according to the present disclosure, defects of the electrode assembly may be reduced. Accordingly, the productivity and yield of a battery manufacturing system and method may be increased.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a schematic diagram of a battery manufacturing system according to an embodiment.
FIG. 2 is a schematic diagram illustrating an example in which a plurality of electrode lanes are formed on one electrode sheet.
FIGS. 3(a) and 3(b) illustrate examples of a plurality of pieces of width data and a plurality of pieces of thickness data of an electrode sheet measured at certain intervals in a longitudinal direction of the electrode sheet.
FIG. 4 is a schematic diagram illustrating an example of a statistical representative value.
FIG. 5 illustrates examples of a width grade allocated to a set electrode width sub-range and a thickness grade allocated to a set electrode thickness sub-range.
FIG. 6 illustrates an example of a grade label attached to an electrode roll.
FIGS. 7(a) and 7(b) illustrate an example of matching a positive electrode sheet and a negative electrode sheet.
FIG. 8 illustrates a battery manufacturing system according to an embodiment.
FIG. 9 is a flowchart of a battery manufacturing method according to an embodiment.

### [Detailed Description]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and may be understood according to meanings and concepts corresponding to the present disclosure on the basis of the principle that the inventor(s) of the application may appropriately define the terms or expressions to optimally explain the present disclosure.

Therefore, embodiments set forth herein and configurations illustrated in the drawings are only examples of the present disclosure and do not reflect all the technical ideas of the present disclosure, and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc., of components illustrated in the drawings may be exaggerated, omitted, or schematically illustrated for clarity. Therefore, it should be understood that the sizes or proportions of components may not fully reflect the actual sizes or proportions thereof.

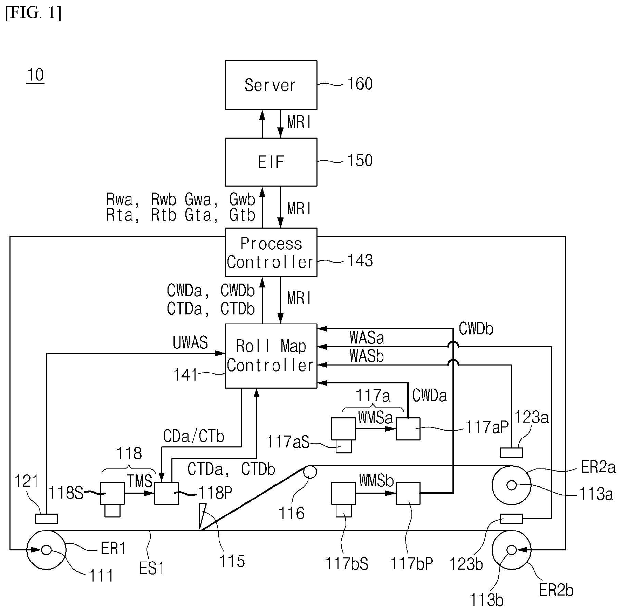

FIG. 1 is a schematic diagram of a battery manufacturing system according to an embodiment.

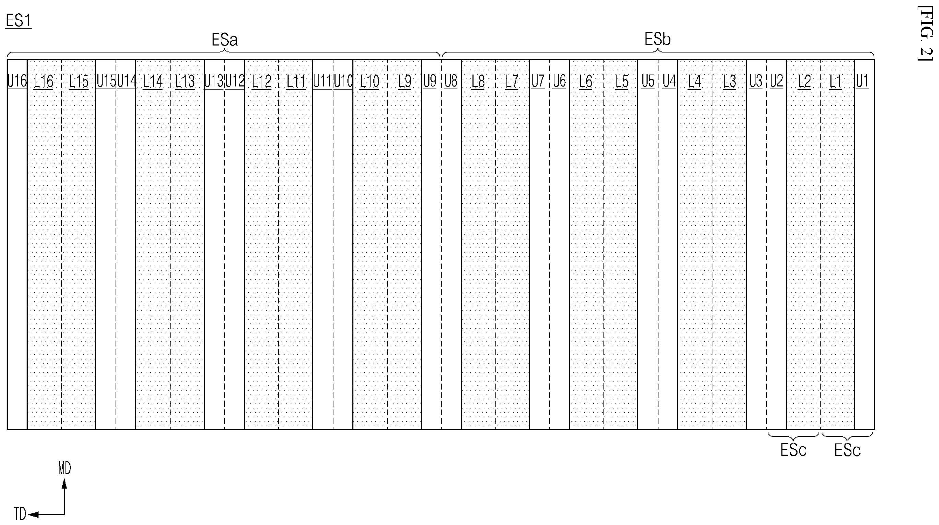

FIG. 2 is a schematic diagram illustrating an example in which a plurality of electrode lanes are formed on one electrode sheet.

Referring to FIG. 1, a battery manufacturing system 10 may include an unwinder 111, rewinders 113a and 113b, a first rotary encoder 121, second rotary encoders 123a and 123b, a slitting knife 115, a guide roll 116, width meters 117a and 117b, a thickness meter 118, a roll map controller 141, a process controller 143, a relay server 150, and a server 160.

The battery manufacturing system 10 may be configured to manufacture a battery cell (e.g., a cylindrical battery cell) by performing a series of roll-to-roll processes. An electrode sheet unwound from an input electrode roll may be processed by a die coater of a coating device, pressing rolls of a roll pressing device, or a slitting knife of a slitting device, and the processed electrode sheet may be wound into an electrode roll. A combination apparatus may combine a positive electrode sheet unwound from a positive electrode roll, a negative electrode sheet unwound from a negative electrode roll, and separator sheets unwound from separator rolls.

A first electrode roll ER1 may be loaded on the unwinder 111. The first electrode roll ER1 may be finished by the roll pressing device, transferred by a transfer device, and loaded on the unwinder 111. The unwinder 111 may be configured to unwind an electrode sheet ES from the first electrode roll ER1.

When the electrode sheet ES1 is a positive electrode sheet, the positive electrode sheet may include a positive electrode current collector and a positive electrode slurry coated on the positive electrode current collector.

When the electrode sheet ES1 is a negative electrode sheet, the negative electrode sheet may include a negative electrode current collector and a negative electrode slurry coated on the negative electrode current collector.

The electrode sheet ES1 may include a plurality of coated lanes L1, L2, L3, L4, L5, L6, L7, L8, L9, L10, L11, L12, L13, L14, L15 and L16 (hereinafter L1 to L16), which are coated with an electrode slurry by a die coater (not shown), on the current collector. The plurality of coated lanes L1 to L16 are portions of the electrode sheet ES1 coated with the electrode slurry.

Neighboring coated lanes L1 and L2, L3 and L4, L5 and L6, L7 and L8, L9 and L10, L11 and L12, L13 and L14, and L15 and L16 may be formed from the same slit of the die coater and may be connected to each other.

The coated lanes L1 and L2, the coated lanes L3 and L4, the coated lanes L5 and L6, the coated lanes L7 and L8, the coated lanes L9 and L10, the coated lanes L11 and L12, the coated lanes L13 and L14, and the coated lanes L15 and L16 may be separated by the slitting knife 115. For example, the electrode sheet ES1 including the sixteen coated lanes L1 to L16 may be separated into an electrode sheet ESa including eight coated lanes L1 to L8 and an electrode sheet ESb including eight coated lanes L9 to L16.

Each of the electrode sheets ESa and ESb may be separated into eight electrode sheets Esc each including one coated lane.

That is, one electrode sheet including a plurality of electrode lanes may be separated along the longitudinal direction to obtain a plurality of electrode sheets corresponding to the plurality of electrode lanes.

Uncoated portions U1, U2, U3, U4, U5, U6, U7, U8, U9, U10, U11, U12, U13, U14, U15, and U16 (hereinafter, U1 to U16) are portions of the electrode sheet ES1 that are not coated with the electrode slurry. The uncoated portions U1 and U16 may be on opposite ends of the electrode sheet ES1 in a transverse direction TD. The uncoated portions U2 and U3 may be interposed between the coated lanes L2 and L3. The uncoated portions U4 and U5 may be interposed between the coated lanes L4 and L5. The uncoated portions U6 and U7 may be interposed between the coated lanes L6 and L7. The uncoated portions U8 and U9 may be interposed between the coated lanes L8 and L9. The uncoated portions U10 and U11 may be interposed between the coated lanes L10 and L11. The uncoated portions U12 and U13 may be interposed between the coated lanes L12 and L13. The uncoated portions U14 and U15 may be interposed between the coated lanes L14 and L15.

The uncoated portion U1 corresponds to the coated lane L1, and the uncoated portion U1 and the coated lane L1 form one electrode lane. After the slitting process is completed, the electrode lane may be separated into the same electrode sheet and wound into an electrode roll by a rewinder.

Similarly, the uncoated portion U2 and the coated lane L2 may form one electrode lane, and the electrode lane may be separated into the same electrode sheet and wound into an electrode roll by the rewinder. As described above, an uncoated portion and a coated lane that are adjacent to each other may form one electrode lane, and the electrode lane may be separated into the same electrode sheet after the slitting process.

For convenience of illustration, FIG. 1 illustrates only the two separate electrode sheets ESa and ESb, but separation of an electrode sheet may be determined based on the number of electrode lanes on the electrode sheet. For example, the electrode sheets ESa and ESb provided by half-slitting the electrode sheet ES1 including the sixteen coated lanes of FIG. 2 may include the eight electrode sheets Esc to be separated, and thus may be cut into the eight separate electrode sheets Esc. The guide roll 116 may be provided in a moving path of the separate electrode sheet ESb to separate a moving path of the separate electrode sheet ESa and the moving path of the separate electrode sheet ESb.

The rewinders 113a and 113b may be configured to wind the separate electrode sheets ESa and ESb into second electrode rolls ER2a and ER2b. The separate electrode sheets ESa and ESb may be wound into the second electrode rolls ER2a and ER2b, and the second electrode rolls ER2a and ER2b may be cut and separated after a target winding amount is reached. Accordingly, the electrode sheet ES1 and the separate electrode sheets ESa and ESb may be moved between the unwinder 111 and the rewinder 113a and 113b.

The first rotary encoder 121 may be configured to sense an amount of the electrode sheet ES1 unwound from the first electrode roll ER1 by the unwinder 111. Accordingly, the first rotary encoder 121 may be configured to generate an input amount signal UWAS indicating a length of the electrode sheet ES1 unwound by the unwinder 111 and lengths of portions of the electrode sheets ESa and ESb before being separated from the electrode sheet ES1. The first rotary encoder 121 may be configured to transmit the input amount signal UWAS to the roll map controller 141.

The second rotary encoders 123a and 123b may be configured to sense amounts of the separate electrode sheets ESa and ESb wound into the second electrode rolls ER2a and ER2b by the rewinders 113a and 113b. Accordingly, the second rotary encoders 123a and 123b may be configured to generate consumption amount signals WASa and WASb indicating lengths of the separate electrode sheets ESa and ESb wound by the rewinders 113a and 113b. The second rotary encoders 123a and 123b may be configured to transmit the consumption amount signals WASa and WASb to the roll map controller 141.

The roll map controller 141 may be configured to collect coordinate data CDa of the electrode sheet ESa and coordinate data CDb of the electrode sheet ESa, based on the input amount signal UWAS of the electrode sheet ES1 and/or the consumption amount signals WASa and WASb of the separate electrode sheets ESa and ESb.

For example, the roll map controller 141 may determine moving distances of the electrode sheets ESa and ESb, based on the input amount signal UWAS of the electrode sheet ES1. Accordingly, the roll map controller 141 may be configured to determine positions of the electrode sheets ESa and ESb unwound by the unwinder 111 at each point in time when an event occurs on either portions of the electrode sheets ESa and ESb before being separated or the electrode sheets ESa and ESb after being separated.

As another example, the roll map controller 141 may determine moving distances of the separate electrode sheets ESa and ESb, based on the consumption amount signals WASa and WASb of the separate electrode sheets ESa and ESb. Accordingly, the roll map controller 141 may be configured to determine positions of the electrode sheets ESa and ESb unwound by the unwinder 111 at each point in time when an event occurs on either portions of the electrode sheets ESa and ESb before being separated or the electrode sheets ESa and ESb after being separated. As another example, the roll map controller 141 may determine moving distances of the electrode sheets ESa and ESb, based on the consumption amount signals WASa and WASb and the input amount signal UWAS.

Hereinafter, as a non-limiting example, the technical idea of the present disclosure will be described with reference to an embodiment in which the coordinate data CDa and CDb are collected based on the consumption amount signals WASa and WASb by a roll map controller.

The coordinate data CDa and CDb may include coordinates matching each of portions of the electrode sheets ESa and ESb. That is, each of points on the separate electrode sheets ESa and ESb may match coordinates. The coordinates may represent one-dimensional (1D) quantities in a machine direction MD of the separate electrode sheets ESa and ESb, but are not limited thereto. For example, the coordinates may represent two-dimensional (2D) quantities in the machine direction MD and the transverse direction TD of the separate electrode sheets ESa and ESb.

The width meters 117a and 117b may be configured to measure a width of each of the separate electrode sheets ESa and ESb. In detail, the width meters 117a and 117b may be configured to measure a width of an electrode slurry-coated portion of each of the separate electrode sheets ESa and ESb. The width meters 117a and 117b may measure widths of the electrode sheets ESa and ESb in a scanning manner. In some embodiments, each of the width meters 117a and 117b may move in a width direction of each of the electrode sheets ESa and ESb.

The width meter 117a corresponding to the electrode sheet ESa may include a sensing part 117aS and a processor 117aP. The sensing part 117aS and the processor 117aP may be connected in a wired or wireless manner.

The sensing part 117aS may generate a width measurement signal WMSa of the electrode sheet ESa.

For example, the sensing part 117aS may include an imaging device such as a time delay and integration (TDI) camera or a complementary metal oxide semiconductor (CMOS) image sensor, etc. The sensing part 117aS may be configured to transmit the width measurement signal WMSa to the processor 117aP.

The width meter 117b corresponding to the electrode sheet ESb may include a sensing part 117bS and a processor 117bP. The sensing part 117bS and the processor 117bP may be connected in a wired or wireless manner. The sensing part 117bS may generate a width measurement signal WMSb of the electrode sheet ESb. The sensing part 117bS may be configured to transmit the width measurement signal WMSb to the processor 117bP.

The sensing parts 117aS and 117bS may measure the widths of the electrode sheets ESa and ESb a plurality of times at certain intervals in the longitudinal direction. For example, the sensing parts 117aS and 117bS may measure the widths of the electrode sheet ESa and ESb at 10-m intervals, 20-m intervals, or 30-m intervals. However, an interval of measurement is not limited thereto. As the number of times that a width is measured increases, the reliability of a representative width of a corresponding electrode sheet may increase.

The processor 117aP may be configured to collect the width measurement signal WMSa generated by the sensing part 117aS to generate width data. The processor 117aP may be configured to collect coordinate-related width data CWDa, based on the width measurement signal WMSa and the coordinate data CDa. The processor 117aP may be configured to transmit the coordinate-related width data CWDa of the electrode sheet ESa to the roll map controller 141.

The processor 117bP may be configured to collect the width measurement signal WMSb generated by the sensing part 117aS to generate width data. The processor 117bP may be configured to collect coordinate-related width data CWDb, based on the width measurement signal WMSb and the coordinate data CDb. The processor 117bP may be configured to transmit the coordinate-related width data CWDb of the electrode sheet ESb to the roll map controller 141.

According to the slitting process, a width (particularly, a width of a coated portion) of each of the electrode sheets ESa and ESb may not be uniformly slit. Therefore, it may be preferable to measure the width of each of the electrode sheets ESa and ESb after they are slit. In this case, a plurality of width meters corresponding to the number of separate electrode sheets may be required.

A plurality of thickness meters may be required to measure a thickness of each of the electrode sheets ESa and ESb after they are slit. The thickness of each electrode sheet is almost the same before and after each electrode sheet is slit. Therefore, the thickness of each electrode sheet does not need to be measured after it is slit, but may be measured before it is slit. In this case, only one electrode sheet including a plurality of electrode sheet portions (electrode lanes) is moved, and thus, one thickness meter may be moved in a scanning manner to measure a thickness of each of the electrode sheet portions of the electrode sheet.

The thickness meter 118 may be configured to measure a thickness of each of electrode sheet portions (each of electrode lanes) of an unwound electrode sheet. Specifically, the thickness meter 118 may be configured to measure a total thickness of each electrode sheet, which is the sum of a thickness of a coated portion of each electrode lane and a thickness of an electrode current collector below the coated portion of each electrode lane. In the case of a single sided coating electrode sheet, the sum of a thickness of a coating portion of one side and a thickness of a current collector may be measured. In the case of a double sided coating electrode sheet, the sum of thicknesses of coating portions of opposite sides and a thickness of a current collector may be measured.

It is preferable to continuously measure a thickness of an electrode sheet in a non-contact manner without stopping a production line. As a non-contact type thickness meter, an ultrasonic sensor, a displacement sensor, a laser sensor, a confocal thickness sensor or the like is available. The confocal thickness sensor is capable of calculating a distance (thickness) by analyzing a wavelength of reflected light.

The thickness meter 118 may measure a thickness of each electrode lane by a scanning method.

The thickness meter 118 may include a sensing part 118S and a processor 118P. The sensing part 118S and the processor 118P may be connected in a wired or wireless manner.

The sensing part 118S may generate a thickness measurement signal TMS for each electrode lane.

The sensing part 118S may be configured to transmit the thickness measurement signal TMS to the processor 118P.

The sensing part 118S may measure the thickness of each electrode lane a plurality of times at certain intervals along the longitudinal direction. For example, the sensing part 118S may measure the thickness of each electrode lane at 10-m intervals, 20-m intervals, or 30-m intervals but an interval of measurement is not limited thereto. As the number of times that a thickness is measured increases, the reliability of a representative thickness of a corresponding electrode sheet may increase.

The processor 118P may be configured to collect the thickness measurement signal TMS generated by the sensing part 118S to generate thickness data. The processor 118P may be configured to collect coordinate-related thickness data CTDa and CTDb, based on the thickness measurement signal TMS and the coordinate data CDa and CDb. The processor 118P may be configured to transmit the coordinate-related thickness data CTDa and CTDb of the electrode sheets ESa and ESb to the roll map controller 141.

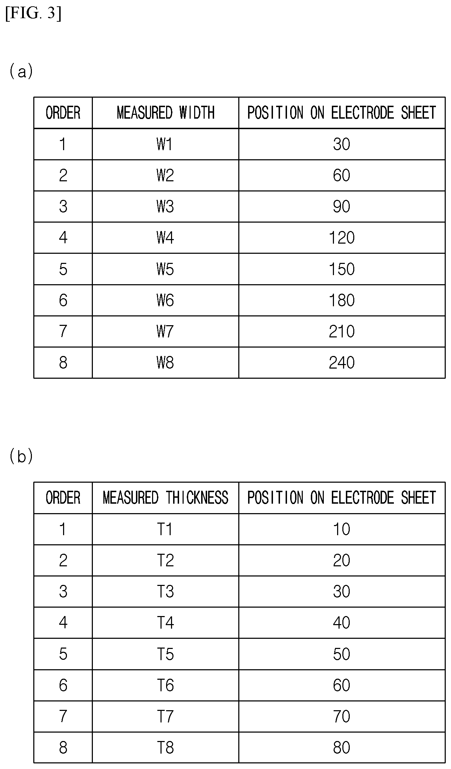

FIGS. 3(a) and 3(b) illustrate examples of a plurality of pieces of width data and a plurality of pieces of thickness data of an electrode sheet measured at certain intervals in a longitudinal direction of the electrode sheet.

FIGS. 1, and 3(a) and 3(b) illustrate that a plurality of pieces of width data and a plurality of pieces of thickness data are obtained at certain time intervals along the longitudinal direction of the plurality of separate electrode sheets ESa and ESb. A width of each electrode sheet was measured eight times at 30 m intervals to obtain widths W1, W2, W3, W4, W5, W6, W7, and W8. A thickness of each electrode sheet was measured eight times at 10 m intervals to obtain thickness T1, T2, T3, T4, T5, T6, T7 and T8. FIG. 3 illustrates only an example, and the number of times that a width and/or a thickness are measured and an interval of measurement are not limited thereto.

The roll map controller 141 may be in operative communication with the first and second rotary encoders 111, 113a and 113b, the width meters 117a and 117b, and the thickness meter 118 through a wired or wireless data network.

The roll map controller 141 may be configured to transmit coordinate data to a processor of a width meter and a processor of a thickness meter.

Coordinate-related width data and/or thickness data transmitted to the roll map controller 141 may be transmitted to the server 160 via the process controller 143. Alternatively, the coordinate-related width data and/or thickness data may be transmitted from the process controller 143 to the server 160 via the EIF 150 (see FIG. 1).

According to the present embodiment, a representative width and/or a representative thickness of each electrode sheet may be derived from a plurality of pieces of width data and/or a plurality of pieces of thickness data.

In order to select a pair of electrode sheets having different polarities to be applied to a combining process, it may be necessary to first identify dimensions of each electrode sheet. In the past, an operator manually unwound electrode sheets from electrode rolls and performed sample inspection on only a portion of an outermost part of each of the electrode sheets to measure a width and thickness of each of the electrode sheets. Therefore, man hours of work for selecting appropriate electrode sheets to be combined together increased, and deviations due to manual inspection inevitably occurred. Moreover, because sample inspection was performed on only a portion of each electrode sheet, it was not possible to accurately identify the dimensions of a portion of the electrode sheet wound into an inner layer of each electrode roll. When a pair of electrode sheets having different polarities were selected based on width data and thickness data measured through the sample inspection, defects in an electrode assembly manufactured in the combining process increased. For example, even when a positive electrode sheet and a negative electrode sheet each having a width within a set range are combined, a meandering defect may occur due to a deviation in width when the positive electrode sheet having a relatively large width and the negative electrode sheet having a relatively small width are put into a winding process.

As such, in the past, the reliability of data of dimensions, e.g., a width and thickness, was low in terms of representativeness, and there was no criterion for selecting and matching electrodes in the combining process.

According to the present embodiment, the reliability of data may be improved by obtaining representative values of widths and thicknesses of an electrode sheet, and a defect rate in the combining process may be reduced by establishing electrode matching criteria in the combining process. In addition, productivity may be significantly increased by automating representative value acquisition and an electrode matching process.

The roll map controller 141 may derive representative widths Rwa and Rwb and/or representative thicknesses Rta and Rtb from a plurality of pieces of width data and/or a plurality of pieces of thickness data collected from the width meters 117a and 117b and/or the thickness meter 118.

For example, the roll map controller 141 may set, as a representative width, one selected from a group comprising of an average, a standard deviation, a maximum, a minimum, a median, and a quartile of a plurality of pieces of width data obtained by measuring each of the electrode sheets ESa and ESb a plurality of times in the longitudinal direction.

Alternatively, the roll map controller 141 may set, as a representative thickness, one selected from the group comprising of an average, a standard deviation, a maximum, a minimum, a median, and a quartile of a plurality of pieces of thickness data obtained by measuring each of the electrode sheets ESa and ESb a plurality of times in the longitudinal direction.

To obtain the representative widths Rwa and Rwb or the representative thicknesses Rta and Rtb, the roll map controller 141 may include a calculation part or a calculator. The calculator may statistically calculate width data and/or thickness data of each electrode sheet to derive a representative value.

For example, when a plurality of pieces of width data or a plurality of pieces of thickness data are used as a sample group, an average may be a value obtained by dividing the sum of values of all the pieces of the data by the number of the pieces of data.

The standard deviation is a square root of a variance. The variance is a value obtained by dividing the sum of squares of deviations, which are the differences between the values of the pieces of the data and the average, by the number of the pieces of data.

The median is a middle value when pieces of data of the sample group are listed in an ascending order. The maximum and the minimum are a largest value and a smallest value among the plurality of pieces of data.

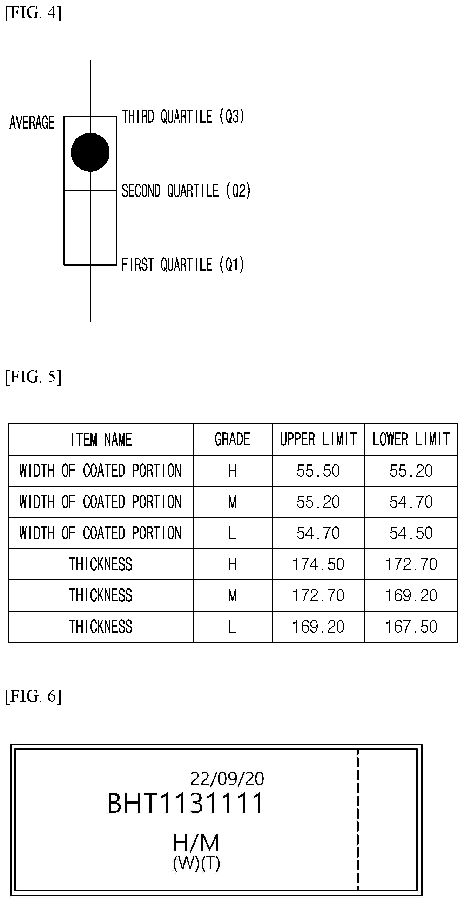

FIG. 4 is a schematic diagram illustrating the concept of a quartile as a statistical representative value.

The quartile is a value obtained by dividing data of a sample group into four equal parts.

A first quartile Q1 is a value where 25% of the data is less than or equal to this value, and is also referred to as a lower quartile.

A second quartile Q2 is a value where 50% of the data is less than or equal to this value, and is also referred to as a median.

A third quartile Q3 is a value where 75% of the data is less than or equal to this value, and is also referred to as an upper quartile.

When a width of a coated portion of a positive electrode sheet is greater than a width of a coated portion of a negative electrode sheet, lithium deposition may be generated in an exposed portion of a positive electrode. Alternatively, even if the width of the coated portion of the positive electrode sheet is not greater than the width of the coated portion of the negative electrode sheet, when the difference between the widths is not significant, alignment tolerance may be small during assembly of the positive and negative electrode sheets, thus resulting in meandering defects in an electrode assembly.

Therefore, in order to reduce the incidence of meandering defects, it may be necessary to approach conservatively when selecting representative widths of the positive electrode sheet and the negative electrode sheet.

That is, large values are more critical for width data of the positive electrode sheet, and thus an upper quartile of a plurality of pieces of width data may be used as a representative width. Small values are more critical for width data of the negative electrode sheet, and thus a lower quartile of a plurality of pieces of width data may be used as a representative width.

In the case of a double sided coated electrode sheet, a representative width of width data of a coated portion of an upper surface and a representative width of width data of coated portion of a lower surface may be different from each other. Similarly, in order to reduce the incidence of meandering defects, it may be necessary to conservatively approach when representative widths of the positive electrode sheet and the negative electrode sheet are selected. That is, in the case of the positive electrode sheet, a larger value among a representative width of an upper surface and a representative width of a lower surface may be used as a representative width of the positive electrode sheet. On the other hand, in the case of the negative electrode sheet, a smaller value among a representative width of an upper surface and a representative width of a lower surface may be used as a representative width of the negative electrode sheet.

Meanwhile, in the case of thickness data, a representative median may be used as a representative value. For example, a median of a plurality of pieces of thickness data of each positive electrode sheet may be used as representative thicknesses Rta and Rtb of each positive electrode sheet. In addition, a median of a plurality of pieces of thickness data of each negative electrode sheet may be used as representative thicknesses Rta and Rtb of each negative electrode sheet.

The roll map controller 141 may calculate representative widths or the representative thicknesses Rta and Rtb of each positive electrode sheet and each negative electrode sheet according to the above-described statistical criteria.

FIG. 5 illustrates examples of a width grade allocated to a set electrode width sub-range and a thickness grade allocated to a set electrode thickness sub-range.

The roll map controller 141 may determine width grades Gwa and Gwb and/or thickness grades Gta and Gtb of electrode sheets according to calculated representative widths Rwa and Rwb and/or representative thicknesses Rta and Rtb.

To determine grades, a set electrode width sub-range and/or a set electrode thickness sub-range may be input or stored in the roll map controller 141. Information about the sub-ranges may be transmitted as part of electrode specification information or manufacturing recipe information MRI from the server 160.

The roll map controller 141 may include a determination part or a determiner to determine grades.

The roll map controller 141 may be a programmable logic controller (PLC). A PLC is a special type of microprocessor-based controller that stores instructions using a programmable memory and implements functions such as logic, sequencing, timing, counting and arithmetic operations to control machines and processes. It is easy to operate and program the PLC.

The roll map controller 141 may include a power supply, a CPU, an input interface, an output interface, a communication interface, and memory devices. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to implement logic and control communication between modules that convert an input signal into an output operation signal. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through the input interface. A result of processing performed by the CPU may be transmitted to the outside through the output interface. The communication interface may be configured to relay transmission and receipt of data between the roll map controller 141 and an external device.

However, embodiments are not limited thereto, and the roll map controller 141 may include a simple controller, a complex processor, such as a microprocessor, a CPU or a GPU, a processor configured by software, dedicated hardware, or firmware.

When the representative widths Rwa and Rwb of the electrode sheets are in one of a plurality of set electrode width sub-ranges, the roll map controller 141 may determine the width grades Gwa and Gwb allocated to the corresponding sub-range as the width grades Gwa and Gwb of the electrode sheets.

Referring to FIG. 5, a range of a width of a coated portion that is set for a specific electrode sheet may be divided into three sub- ranges according to size, and an H-grade (maximum electrode width sub-range), an M-grade, and an L-grade (minimum electrode width sub-range) are allocated to each of the sub-ranges. When the derived representative widths Rwa and Rwb of the electrode sheets (e.g., an upper quartile of the positive electrode sheet and a lower quartile of the negative electrode sheet) are in one of the above sub-ranges, and particularly, when the representative widths Rwa and Rwb are between an upper limit and a lower limit of each of the sub-ranges, the roll map controller 141 may determine grades of the corresponding sub- range as the width grades Gwa and Gwb of the electrode sheets.

When the representative thicknesses Rta and Rtb of the electrode sheets are in one of a plurality of set electrode thickness sub-ranges, the roll map controller 141 may determine the thickness grades Gta and Gtb allocated to the corresponding sub-range as the thickness grades Gta and Gtb of the electrode sheets. Referring to FIG. 5, a range of a thickness of a coated portion that is set for a specific electrode sheet may be divided into three sub- ranges according to size, and an H-grade (maximum electrode thickness sub-range), an M-grade, and an L-grade (minimum electrode thickness sub-range) are allocated to each of the sub-ranges. When derived representative thicknesses of the electrode sheets (e.g., a median of thickness data of the positive electrode sheet and a median of thickness data of the negative electrode sheet) are in one of the above sub-ranges, the roll map controller 141 may determine grades of the corresponding sub-range as the thickness grades Gta and Gtb of the electrode sheets. Information about the determined grades of the electrode sheets may be transmitted to the server 160 via the process controller 143 and the relay server 150.

The process controller 143 and the relay server (e.g., the EIF 150) may relay communication of data, including inspection and/or measurement data, between the server 160 and the roll map controller 141. However, embodiments are not limited thereto, and the roll map controller 141 may directly transmit coordinate-related inspection and/or measurement data (e.g., width data and/or thickness data) to the server 160.

The process controller 143 may be configured to control operations of the unwinder 111, the rewinders 113a and 113b, and the slitting knife 115. The process controller 143 may be configured to generate a signal for operating or stopping the unwinder 111, the rewinders 113a and 113b, and the slitting knife 115. The signal may be generated based on a body containing a product ID and details of a manufacturing recipe.

For control of a process, a communication channel may be installed between the process controller 143 and the server 160 to connect the process controller 143 and the server 160 via the EIF 150 . Accordingly, data transmission through the process controller 143 may reduce resources required for the installation of the communication channel and ensure efficient data processing and management, compared to a case in which the first and second rotary encoders 121 and 123 and measuring devices directly transmit an unwinding amount signal UWAS, winding amount signals WASa and WASb, and an inspection and/or measurement signal to the server 160 and a case in which the roll map controller 141 directly transmits related data CMD to the server 160.

The EIF 150 may be a device for communication between the server 160 and process controllers of manufacturing equipment. A process controller in a coating process, a roll pressing process, a slitting process or the like may communicate with the server 160 through the EIF 150.

In addition, a process controller of a combinator or a combination device may communicate with the server 160 via the EIF 150.

Accordingly, data of process events occurring in the coating process, the roll pressing process, the slitting process, and the combining process may be transmitted to the server 160.

The server 160 may be configured to create a roll map including the data of the process events. Data of the roll map may include a value indicating a process event and a coordinate matching the value. The coordinate may indicate a position on an electrode (sheet). Accordingly, the roll map enables feedback, feedforward, and tracking of a battery manufacturing process, which will be described below.

Roll maps may be produced in units of lots. A lot is a production unit of a roll-to-roll process, and an electrode roll loaded on an unwinder in each process is an example of the lot. The server 160 may create and store a roll map of each process (e.g., the coating process, the roll pressing process, or the slitting process).

In a roll map, time series data constructed over time (i.e., according to the progress of a process) may be related to coordinate data collected based on the amount of movement (i.e., the amount of exhaustion or the amount of input) of the electrode sheet.

The manufacture of a battery involves a series of different processes, and a leading process affects the following process. In this case, it is difficult to reflect time series data of the leading process in the following process when the time series data of the leading process does not directly match a workpiece, an intermediate product, and a product of the real world. Hereinafter, correcting the following process on the basis of data generated according to a result of the leading process may be referred to as feedforward.

Here, the workpiece may be an article provided as a result of each process, e.g., an electrode sheet on which the coating process, the roll press process, and the slitting process are performed. The intermediate product may include separators, electrodes, or and assemblies thereof. The intermediate product may be a structure including a housing and an electrode assembly included in the housing (in some cases, the structure further includes an electrolyte). The product may be an article processed by the activation process to be operable as a battery. The above-described definitions of the workpiece, the intermediate product, and the product are definitions thereof only in one aspect, and thus should not be understood as excluding general definitions thereof.

Generally, process events occur as a result of performing a process, and thus data thereof is time series data. Accordingly, data of process events may include values indicating the events and time values matched thereto. Accordingly, the data of the process events may be time series data.

For feedforward, time series data should be related to positions on workpieces, components, intermediate products, and products of the real world. Here, the feedforward may include controlling processing of an electrode sheet, based on a roll map generated in a preceding process. The roll map may allow time series data to be related with coordinate data including coordinates of the positions on the workpieces, the components, the intermediate products, and the products of the real world. The roll map may provide matching between the time series data and the workpieces, the components, the intermediate products, and the products of the real world, based on the coordinate data. Accordingly, feedforward based on generation of the roll map and the roll map may improve productivity and quality by digitizing and objectifying aspects of a process that depend on an operator's discretion.

A roll map of a preceding lot may be used to improve a process for a following lot, and this operation may be referred to as process feedback. The process feedback using the roll map may include identifying process conditions and process parameters that cause problems and defects, based on data included in the roll map.

Furthermore, the roll maps may be cumulatively generated for workpieces, intermediate products, and products of unit processes to track process history of products (e.g., battery cells, battery modules, or battery packs) on the market. For example, a battery cell may include a cell ID formed on an electrode assembly or case. The cell ID may include lot numbers and coordinate information of electrodes and a separator included in the battery cell. In other words, the cell ID may be related to a roll map of the electrodes and the separator included in the battery cell. Accordingly, when an event, e.g., a quality issue, occurs in the battery cell on the market, history data of the manufacture of the battery cell may be retrieved based on the cell ID.

According to example embodiments, the server 160 may be a data processing system that supports all activities necessary to manage the manufacturing of batteries, such as work schedule management, work instructions, quality control, and work performance tally. The server 160 may be, for example, a manufacturing execution system (MES). The server 160 may be configured to perform inputting, processing, outputting, and communication of data necessary for the manufacture of electrodes, including the coating process, a press process, and a slitting process.

According to other example embodiments, the server 160 may be configured to store and process raw measurement data. The server 160 may manage the quality of processing the electrode sheet by continuously monitoring the processing of the electrode sheet based on the measurement data. According to example embodiments, the server 160 may be a statical process controller (SPC). The server 160 may collect and analyze manufacturing data in real or almost real time to identify problematic conditions in a timely manner and provide a notification to an operator before potential problems occur.

According to other example embodiments, the server 160 may be, for example, a data warehouse, and store a roll map for a long period of time according to a product quality guarantee period and the like.

According to other example embodiments, the server 160 may perform all functions of an MES, an SPC, and a data warehouse or be provided separately from the MES, the SPC, and the data warehouse to create a roll map.

The separate electrode sheets ESa and ESb may be respectively wound by the rewinders 113a and 113b to complete the second electrode rolls ER2a and ER2b to be put into the combining process.

An operator may check information related to each completed electrode roll from a server. The operator may check a representative width, a representative thickness, and grade information stored in the server 160. Specifically, an electrode lane number, a representative width, a width grade, a representative thickness, and a thickness grade of an electrode roll may be identified by searching for a lot number or completion date of the electrode roll. The grade information may be attached to each completed electrode roll.

FIG. 6 illustrates an example of a grade label attached to an electrode roll.

Each of the completed second electrode rolls ER2a and ER2b may form a lot of an electrode sheet corresponding thereto. A label on which identification information of a corresponding lot is written may be attached to each electrode roll.

The width grade and/or the thickness grade may be displayed on the completed second electrode rolls ER2a and ER2b. The information about the grade may be written to a grade label and the grade label may be attached to the electrode roll. Alternatively, the information about the grade may be additionally displayed on a label on which lot identification information is written. In any case, these labels may serve as grade labels.

FIG. 6 illustrates grade information together with a date and time when an electrode roll was completed and lot identification information. A width W is indicated as an H-grade, and a thickness T is indicated as an M-grade. However, a display of grade information is not limited thereto, and the grade information may be displayed using other electronic codes such as barcode and QR code, symbols, numbers, or the like.

An operator may check size information of the electrode roll from the grade label. Based on the size information, a pair of electrode sheets to be put into a combining process may be selected. Alternatively, a transportation means (e.g., an automated guided vehicle (AGV)) for transporting electrode rolls for the combining process may identify the grade information and select a pair of electrode rolls (electrode sheet) to be put into the combining process. In this case, the AGV may refer to electrode matching criteria stored in the server 160 or the like.

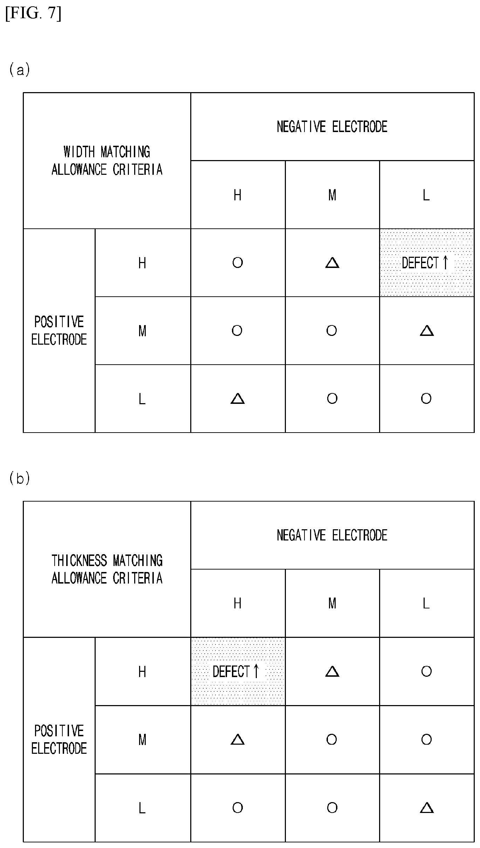

FIG. 7 illustrates an example of matching a positive electrode sheet and a negative electrode sheet.

Grade information determined by a grader (the roll map controller 141 or a determiner of the roll map controller 141) may be stored in the server 160. In the server 160, electrode matching criteria that minimize defects in an electrode assembly may be stored. Accordingly, the server 160 may serve as a matcher for selecting and matching a pair of electrode sheets to be combined in the combining process. Alternatively, an AGV may be considered as a matcher when the AGV actually selects an electrode roll to be put into the combining process by referring to the electrode matching criteria of the server 160 or the electrode matching criteria stored in a memory device of the AGV. Information about electrode matching criteria may be periodically downloaded from a server to the m device of the AGV.

FIGS. 7(a) and 7(b) illustrate electrode matching criteria (a width matching allowance criterion and a thickness matching allowance criterion of each of a positive electrode and a negative electrode). Referring to FIG. 7(a), in order to prevent a meandering defect of an electrode assembly, it may be necessary to select a pair of a positive electrode sheet and a negative electrode sheet such that a positive electrode sheet with a width grade (H-grade) that is in a maximum positive electrode width sub-range and a negative electrode sheet with a width grade (L-grade) that is in a minimum negative electrode width sub-range are not matched. Because a width grade of a positive electrode is determined based on an upper quartile of width data of the positive electrode, a width of a positive electrode sheet with the H-grade may be greater than a width of the negative electrode sheet. On the other hand, because a width grade of a negative electrode is determined based on a lower quartile of width data of the negative electrode, a width of a negative electrode sheet with the L-grade may be less than a width of a positive electrode sheet. Therefore, electrode matching criteria may be determined such that the matching of a positive electrode sheet having a width of the H-grade and a negative electrode sheet having a width of the L-grade is considered as a defect (X), and thus is not allowed.

Generally, matching of negative electrode sheets with the other width grades and positive electrode sheets with the other width grades may be regarded as normal. Meanwhile, the quality of battery intermediate products (e.g., an electrode assembly) to be combined or the quality of a battery product may be predicted based on the above-described grade information.

For example, the matching of a positive electrode sheet and a negative electrode sheet whose width grade is higher than that of the positive electrode sheet may be regarded as good (○).

For example, the matching of a negative electrode sheet and a positive electrode sheet when the difference between width grades thereof is extremely high or when the with grade of the negative electrode sheet is slightly higher than the width grade of the positive electrode sheet may be regarded as middle (△). In this case, it can be predicted that the matching of corresponding electrodes is allowed, but the quality of an electrode assembly when matching is considered as good is not reached.

Referring to FIG. 7(b), in order to prevent another defect of an electrode assembly, it may be necessary to select a pair of a positive electrode sheet and a negative electrode sheet such that a positive electrode sheet with a thickness grade (H-grade) that is in a maximum positive electrode thickness sub-range and a negative electrode sheet with a thickness grade (H-grade) that is in a maximum negative electrode width sub-range are not matched. For example, when a jelly roll type electrode assembly is manufactured by combining a pair of a thick positive electrode sheet and a thick negative electrode sheet, a size of the electrode assembly may exceed a set value. In this case, swelling pressure of a battery cell including the electrode assembly may increase when charged or discharged, and a load applied to a cell case of the battery cell may increase.

Therefore, electrode matching criteria may be determined such that the matching of a positive electrode sheet having a thickness of the H-grade and a negative electrode sheet having a thickness of the H-grade is considered as a defect (X), and thus is not allowed.

Generally, matching of negative electrode sheets with the other thickness grades and positive electrode sheets with the other thickness grades may be regarded as normal. Similarly, the quality of an electrode assembly to be manufactured in the combining process may be predicted by classifying matching criteria as good (○) or middle (△) according to a thickness grade of a negative electrode sheet and a thickness grade of a positive electrode sheet.

As shown in FIGS. 7(a) and 7(b), matching allowance criteria in the case of a width grade may be different from matching allowance criteria in the case of a thickness grade.

According to the matching allowance criteria of FIGS. 7(a) and 7(b), the matching of electrodes when both the width grade and the thickness grade are considered as good (○) may be recommended. However, the matching of electrodes (sheets) considered as a defect (X) in terms of at least one of an aspect of the width grade or an aspect of the thickness grade may be excluded. The matching of electrodes considered as middle (△) in consideration of productivity may be allowed.

### [Embodiments of the Disclosure]

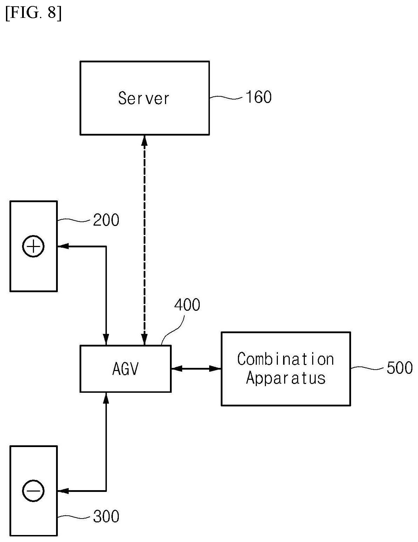

FIG. 8 illustrates a battery manufacturing system according to an embodiment.

A battery manufacturing system 20 may include a server 160, a positive electrode roll storage 200, a negative electrode roll storage 300, an AGV 400, and a combination apparatus 500.

The server 160 may be the same as the server 160 of FIG. 1 and stores a representative width, a representative thickness, and information about a width grade and a thickness grade of an electrode sheet, electrode matching criteria, and the like.

The positive electrode roll storage 200 and the negative electrode roll storage 300 may respectively store, for example, a positive electrode roll and a negative electrode roll that are completed through the slitting process. The positive electrode roll may be a result of winding a positive electrode sheet separated by slitting. The negative electrode roll may be a result of winding a negative electrode sheet separated by slitting. Alternatively, the positive or negative electrode roll may be a result of winding a positive or negative electrode sheet that has not undergone the slitting process according to electrode specifications.

A grade label may be attached to each of the positive electrode roll and the negative electrode roll as shown in FIG. 6.

The AGV 400 may move to the positive electrode roll storage 200 and the negative electrode roll storage 300 to transport the positive electrode roll and the negative electrode roll.

The AGV 400 may include a scanner, a memory device, a computing device with a communication interface, and the like. Electrode matching criteria may be stored in the memory device of the AGV 400. Alternatively, the AGV 400 may download electrode matching criteria related to the positive electrode and the negative electrode from the server 160. The AGV 400 may periodically download information about electrode matching criteria from the server 160.

The AGV 400 moving to each of the positive and negative electrode roll storages 200 and 300 may identify grade information of the grade label attached to each of the positive electrode roll and the negative electrode roll. For example, the AGV 400 may identify a width grade and/or a thickness grade of the positive electrode roll or the negative electrode roll by scanning the barcode of the grade label. The AGV 400 may select a pair of electrode sheets to be combined in the combining process according to electrode matching criteria such as that of FIG. 7.

The AGV 400 may not select a positive electrode roll and a negative electrode roll that are considered at least a defect (X) when combined, based on the electrode matching criteria. The AGV 400 may select a positive electrode roll and a negative electrode roll that are considered as good (○) or middle (△) when combined. The AGV 400 may carry selected positive and negative electrode rolls to the combination apparatus 500.

The combination apparatus 500 may cut a positive electrode sheet unwound from the positive electrode roll and a negative electrode sheet unwound from the negative electrode roll by a cutter to form a positive electrode and a negative electrode, and combine the positive electrode and the negative electrode.

The combination apparatus 500 may be a lamination device that puts a separator between the positive and negative electrodes and presses and combines the positive electrode and the negative electrode.

The combination apparatus 500 may be a zigzag stacking (ZZS) combination apparatus or an advanced zigzag stacking (AZS) combination apparatus that stacks a separator, which extends in a zigzag fashion, between a positive electrode and a negative electrode in the zigzag fashion and combines the positive and negative electrodes.

The combination apparatus 500 may be a winding combination apparatus that winds a positive electrode and a negative electrode with a separator therebetween to form a jelly roll type electrode assembly.

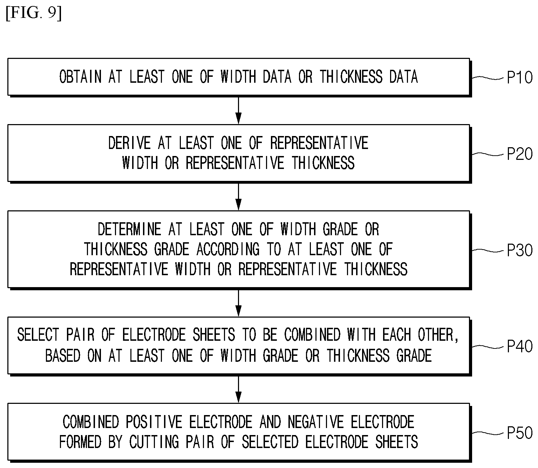

FIG. 9 is a flowchart of a battery manufacturing method according to an embodiment.

Referring to FIGS. 1 and 9, in operation P10, a plurality of pieces of width data and/or a plurality of pieces of thickness data may be obtained by measuring a width and/or a thickness of an electrode sheet a plurality of times along a longitudinal direction of the electrode sheet.

The electrode sheet may be moved in a roll-to-roll state along the longitudinal direction between an unwinder and a rewinder. To this end, an electrode roll into which the electrode sheet is wound may be loaded on the unwinder.

The electrode sheet may be an electrode sheet slit and separated from one electrode sheet. The one electrode sheet may include a plurality of electrode lanes. The one electrode sheet may be divided in the longitudinal direction into a plurality of electrode sheets, which correspond to the plurality of electrode lanes, to be measured (see FIGS. 1 and 2). However, the scope of the present disclosure is not limited thereto and may include obtaining width data and/or thickness data when an electrode sheet with a single electrode lane is moved. That is, width data and thickness data of each electrode sheet may be obtained when each electrode sheet is divided into a plurality of electrode sheets through the slitting process or when a single electrode sheet is moved in a roll-to-roll state.

A width and/or a thickness may be measured at certain intervals along a longitudinal direction of each electrode sheet. A width measurement interval and a thickness measurement interval may be the same or different. When the slitting process is performed, a thickness of a plurality of electrode lanes may be measured before they are slit, and a width of the electrode sheets separated after slit may be measured (see FIG. 1).

A width meter and a thickness meter may be installed at the electrode sheet to measure a width and a thickness. In the slitting process, the number of width meters or thickness meters corresponding to the number of separate electrode sheets may be installed at the separate electrode sheets.

In operation P20, a representative width and/or a representative thickness of each electrode sheet may be derived from the plurality of pieces of width data and/or the plurality of pieces of thickness data. Each of the representative width or the representative thickness may be one selected from the group consisting of an average, a standard deviation, a maximum, a minimum, a median, and a quartile of the plurality of pieces of width data or the plurality of pieces of thickness data. A criterion for selecting a representative width of a positive electrode sheet and a criterion for selecting a representative width of a negative electrode sheet may be different from each other. For example, the representative width of the positive electrode sheet may be an upper quartile of the plurality of pieces of width data. For example, the representative width of the negative electrode sheet may be a lower quartile of the plurality of pieces of width data.

A criterion for selecting a representative thickness of the positive electrode sheet and a criterion for selecting a representative thickness of the negative electrode sheet may be the same. For example, the representative thickness of the positive electrode sheet may be a median of the plurality of pieces of thickness data.

To calculate a representative width or a representative thickness, the battery manufacturing system may include a calculator. As shown in FIG. 1, the roll map controller 141 configured to create a roll map may be the calculator. Alternatively, the roll map controller 141 may include the calculator. Width data or thickness data measured by a width meter or a thickness meter may be transmitted to the roll map controller 141. In this case, each piece of the data may be related to a position (coordinates) on the electrode sheet at a point in time when each piece of the data was obtained.

However, the processors 117aP and 117bp of the width meters 117a and 117b or the processor 118P of the thickness meter 118 includes a calculation part or a calculator, a representative width or a representative thickness may be calculated. In this case, the processors may transmit the representative width or the representative thickness to the roll map controller 141.

In operation P30, a width grade and/or a thickness grade of each electrode sheet may be determined according to the representative width and/or the representative thickness.

To determine a grade, a plurality of electrode width sub-ranges or a plurality of electrode thickness sub-ranges may be set in terms of width or thickness. In addition, a width grade or a thickness grade may be allocated to each of the sub-ranges.

The sub-ranges and the allocated width grade or thickness grade may be determined according to specification information of a corresponding electrode sheet. The roll map controller 141 may receive information about the sub-range and the allocated grades as part of electrode specification information or manufacturing recipe information (MRI) from the server 160.

When a representative width of the electrode sheets is in one of the plurality of set electrode width sub-ranges, a grader (e.g., the roll map controller 141) may determine a width grade allocated to the sub-range as a width grade of the electrode sheets.

When a representative thickness of the electrode sheet is in one of the plurality of set electrode thickness sub-ranges, a thickness grade allocated to the sub-range may be determined as a thickness grade of the electrode sheet. The grader may transmit information about the determined grades to the server 160, together with information about the representative width/thickness.

In operation P40, based on the width grade and/or the thickness grade, a pair of electrode sheets having different polarities to be combined with each other may be selected from among a plurality of electrode sheets.

Referring to FIG. 1, the server 160 may serve as a matcher that selects and matches a pair of electrode sheets. Alternatively, as shown in FIG. 8, a means of transporting an electrode roll (e.g., the AGV 400) may actually serve as a matcher.

The matcher may select a pair of electrode sheets according to an electrode matching criterion. The matcher may select a pair of electrode sheets such that defects do not occur in the combining process. For example, the matcher may select a pair of a positive electrode sheet and a negative electrode sheet such that a positive electrode sheet with a width grade that is in a maximum positive electrode width sub-range and a negative electrode sheet with a width grade that is in a minimum negative electrode width sub-range do not match.

For example, the matcher may select a pair of a positive electrode sheet and a negative electrode sheet such that a positive electrode sheet with a thickness grade that is in a maximum positive electrode thickness sub-range and a negative electrode sheet with a thickness grade that is in a maximum negative electrode thickness sub-range do not match.

These representative values or the information about the grades may be displayed on an electrode roll to be put into the combining process. The electrode roll may be a result of winding each electrode sheet separated by slitting in FIG. 1. Otherwise, the electrode sheet may be a result of winding an individual electrode sheet that does not undergo the slitting process.

A grade label may be provided on the electrode roll. A width grade and/or a thickness grade of a corresponding electrode sheet may be displayed on the grade label.

The width grade may be given according to a representative width derived from a plurality of pieces of electrode width data measured along a longitudinal direction of the corresponding electrode sheet.

The thickness grade may be given according to a representative thickness derived from a plurality of pieces of electrode thickness data measured along the longitudinal direction of the corresponding electrode sheet.

In operation P50, the pair of electrode sheets having different polarities, which are selected based on the width grade and/or the thickness grade, may be combined with each other. Rolls (electrode rolls) of the electrode sheet selected according to an electrode matching criterion may be put into the combining process by a transfer means such as an AGV. In the combining process, each electrode sheet may be cut into a positive electrode and a negative electrode. The positive electrode and the negative electrode may be combined with each other with a separator therebetween. The combination apparatus may be, for example, a lamination device, a ZZS combination apparatus, an AZS combination apparatus, or a winding combination apparatus.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

### (Reference Numerals)

10, 20: battery manufacturing system
111: unwinder
113a, 113b: rewinder
121: first rotary encoder
123a, 123b: second rotary encoder
115: slitting knife
116: guide roll
117a, 117b: width meter
118: thickness meter
ES1: electrode sheet
ESa, ESb: separate electrode sheet
141: roll map controller
143: process controller
150: relay server
160: server
200: positive electrode roll storage
300: negative electrode roll storage
400: automated guided vehicle
500: combination apparatus

## Claims

1. A battery manufacturing system comprising:
at least one measuring device to obtain a plurality of pieces of width data and/or a plurality of pieces of thickness data by measuring a width and/or a thickness of each of a plurality of electrode sheets multiple times in a longitudinal direction of the plurality of electrode sheets, the at least one measuring device including a width meter and/or a thickness meter;
a grader to derive a representative width and/or a representative thickness of each of the electrode sheets from the plurality of pieces of width data and/or the plurality of pieces of thickness data and determine a width grade and/or a thickness grade of each of the electrode sheets according to the representative width and/or the representative thickness; and
a matcher to select a pair of electrode sheets having different polarities to be combined from among the plurality of electrode sheets for matching, based on the width grade and/or the thickness grade.

2. The battery manufacturing system of claim 1, wherein one selected from the group comprising of an average, a standard deviation, a maximum, a minimum, a median, and a quartile of the plurality of pieces of width data and/or the plurality of pieces of thickness data is set as the representative width and/or the representative thickness, respectively.

3. The battery manufacturing system of claim 2, wherein an upper quartile of a plurality of pieces of width data of each positive electrode sheet is set as a representative width of each positive electrode sheet, and
a lower quartile of a plurality of pieces of width data of each negative electrode sheet is set as a representative width of each negative electrode sheet.

4. The battery manufacturing system of claim 2, wherein a median of a plurality of pieces of thickness data of each positive electrode sheet is set as a representative thickness of each positive electrode sheet, and
a median of a plurality of pieces of thickness data of each negative electrode sheet is set as a representative thickness of each negative electrode sheet.

5. The battery manufacturing system of claim 1, wherein the grader is configured to:
determine a width grade allocated to a sub-range as a width grade of an electrode sheet, when the representative width of the electrode sheet falls within any one of a plurality of set electrode width sub-ranges; and
determine a thickness grade allocated to the sub-range as a thickness grade of the electrode sheet, when a representative thickness of the electrode sheet falls within any one of a plurality of set electrode thickness sub-ranges.

6. The battery manufacturing system of claim 5, wherein the matcher is configured to:
select a pair of a positive electrode sheet and a negative electrode sheet to prevent matching of a positive electrode sheet with a width grade that is in a maximum positive electrode width sub-range and a negative electrode sheet with a width grade that is in a minimum negative electrode width sub-range; and/or
select a pair of a positive electrode sheet and a negative electrode sheet to prevent matching of a positive electrode sheet with a thickness grade that is in a maximum positive electrode thickness sub-range and a negative electrode sheet with a thickness grade that is in a maximum negative electrode thickness sub-range.

7. The battery manufacturing system of claim 1, wherein the plurality of electrode sheets corresponding to a plurality of electrode lanes are obtained by dividing one electrode sheet including the plurality of electrode lanes in the longitudinal direction,
the battery manufacturing system further comprises a slitting knife to divide the one electrode sheet into the plurality of electrode sheets in the longitudinal direction,
the width data is obtained after the dividing of the one electrode sheet into the plurality of electrode sheets, and/or
the thickness data is obtained before the dividing of the one electrode sheet into the plurality of electrode sheets.

8. A battery manufacturing method comprising:
obtaining a plurality of pieces of width data and/or a plurality of pieces of thickness data by measuring a width and/or a thickness of each of a plurality of electrode sheets multiple times in a longitudinal direction of the plurality of electrode sheets;
deriving a representative width and/or a representative thickness of each of the electrode sheets from the plurality of pieces of width data and/or the plurality of pieces of thickness data;
determining a width grade and/or a thickness grade of each of the electrode sheets according to the representative width and/or the representative thickness; and
selecting a pair of electrode sheets having different polarities to be combined from among the plurality of electrode sheets for matching, based on the width grade and/or the thickness grade.

9. The battery manufacturing method of claim 8, wherein the representative width and/or the representative thickness is one selected from the group comprising of an average, a standard deviation, a maximum, a minimum, a median, and a quartile of the plurality of pieces of width data and/or the plurality of pieces of thickness data, respectively.

10. The battery manufacturing method of claim 9, wherein an upper quartile of a plurality of pieces of width data of each positive electrode sheet is set as a representative width of each positive electrode sheet, and
a lower quartile of a plurality of pieces of width data of each negative electrode sheet is set as a representative width of each negative electrode sheet.

11. The battery manufacturing method of claim 9, wherein a median of a plurality of pieces of thickness data of each positive electrode sheet is set as a representative thickness of each positive electrode sheet, and
a median of a plurality of pieces of thickness data of each negative electrode sheet is set as a representative thickness of each negative electrode sheet.

12. The battery manufacturing method of claim 8, further comprising:
determining a width grade allocated to a sub-range as a width grade of an electrode sheet, when the representative width of the electrode sheet falls within any one of a plurality of set electrode width sub-ranges, and
determining a thickness grade allocated to the sub-range as a thickness grade of the electrode sheet, when the representative thickness of the electrode sheet falls within any one of a plurality of set electrode thickness sub-ranges.

13. The battery manufacturing method of claim 12, further comprising:
selecting a pair of a positive electrode sheet and a negative electrode sheet to prevent matching of a positive electrode sheet with a width grade that is in a maximum positive electrode width sub-range and a negative electrode sheet with a width grade that is in a minimum negative electrode width sub-range; and/or
selecting a pair of a positive electrode sheet and a negative electrode sheet to prevent matching of a positive electrode sheet with a thickness grade that is in a maximum positive electrode thickness sub-range and a negative electrode sheet with a thickness grade that is in a maximum negative electrode thickness sub-range.

14. The battery manufacturing method of claim 8, wherein the plurality of electrode sheets corresponding to a plurality of electrode lanes are obtained by dividing one electrode sheet including the plurality of electrode lanes in the longitudinal direction,
the width data is obtained after the dividing of the one electrode sheet into the plurality of electrode sheets, and/or
the thickness data is obtained before the dividing of the one electrode sheet into the plurality of electrode sheets.

15. An electrode roll into which an electrode sheet is wound, comprising a grade display label on which a width grade and/or a thickness grade is displayed, wherein the width grade is given according to a representative width derived from a plurality of pieces of electrode width data measured in a longitudinal direction of the electrode sheet, and/or the thickness grade is given according to a representative thickness derived from a plurality of pieces of electrode thickness data measured in the longitudinal direction of the electrode sheet.
